# EUROPEAN PATENT APPLICATION

(11) **EP 2 899 619 A1**
(43) Date of publication of application: **29.07.2015**
(21) Application number: 13796712.1
(22) Date of filing: 14.06.2013
(51) Int. Cl.: G06F 3/0484

(54) **SCREEN IMAGE DISPLAY METHOD AND DEVICE**

(30) Priority: 18.09.2012 CN 201210345663
(71) Applicant: ZTE Corporation, Shenzhen, Guangdong 518057 (CN)
(72) Inventor: LU, Changjiang, Shenzhen Guangdong 518057 (CN); WANG, Jianxiu, Shenzhen Guangdong 518057 (CN)
(74) Representative: Benson, Christopher
(86) International application number: PCT/CN2013/077227
(87) International publication number: WO 2013/178105

(57) **Abstract**

A method and apparatus for displaying screen images are provided. The method includes: setting a position of an image display trigger point; receiving, from the image display trigger point, a trigger signal from a user, and when determining that the position where the trigger signal is located moves continuously relative to the display trigger point, displaying a circular image on a screen according to the continuous moving track of the trigger signal. In the above-mentioned technical scheme, the image is displayed on the screen according to the moving track of the trigger signal sent by the user, so that the method for displaying an image on a screen is more novel and diversified.

## Description

### Technical Field

The present invention relates to the image displaying field, and in particular, to a method and apparatus for displaying screen images.

### Background of the Related Art

Some mobile terminals preset the shortcut icons of the common applications in their lock screen interfaces at present, and the users can jump over the step of unlocking the lock screen interfaces through clicking these shortcut images and access the corresponding application programs directly, which has promoted the user experience greatly.

If the display mode of the icons in the lock screen interfaces can be optimized, then the user attention will be attracted even more.

### Summary of the Invention

The embodiment of the present invention provides a method and apparatus for displaying screen images to optimize displaying the icon in the lock screen interface.

In order to solve the above-mentioned technical problem, the embodiment of the present invention provides the following technical scheme.

A method for displaying screen images is provided, comprising:
setting a position of an image display trigger point;
when receiving, from the image display trigger point, a trigger signal from a user and when determining that a position where the trigger signal is located moves continuously relative to the image display trigger point, displaying a circular image on a screen according to a continuous moving track of the trigger signal.

Alternatively, the step of displaying a circular image on a screen according to a continuous moving track of the trigger signal comprises:
when measuring that the distance of the position where the trigger signal is located relative to the position of the image display trigger point is greater than a radius of a first circular image pre-displayed, displaying the first circular image at the position of the image display trigger point of the screen, and recording a center of the first circular image as o(1);
when measuring that the distance of the position where the trigger signal is located relative to a position of the o(i) is greater than the sum of radiuses of a pre-displayed ith circular image and an (i+1)th circular image, selecting a point, on the continuous moving track of the trigger signal, of which a distance to the position of the o(i) is equal to the sum of the radiuses of the (i)th circular image and the (i+1)th circular image, taking the point as a center o (i+1) of the (i+1)th circular image to be displayed, and displaying the (i+1)th circular image on the position of the o(i+1); wherein *i* ∈ [1,*n*], n is the number of preset displayed images, and n is a natural number.

Alternatively, the method further comprises:
after setting the position of the image display trigger point, displaying an icon representing the image display trigger point on the screen through a visual overlay image mode.

Alternatively, the method is used for displaying an icon of an application program by a mobile terminal in a lock screen state.

A apparatus for displaying screen images is provided, comprising: an image display trigger point setting module (301) and an image display module; wherein
the image display trigger point setting module (301) is configured to set a position of an image display trigger point, and notify the position of the image display trigger point to the image display module (302);
the image display module (302) is configured to: when detecting that a trigger signal from a user is received from the image display trigger point and when determining that the trigger signal moves continuously out of the image display trigger point, display a circular image on a screen according to a continuous moving track of the trigger signal.

Alternatively, the image display module is configured to display the circular image on the screen according to the continuous moving track of the trigger signal in the following way:
when measuring that the distance of a position where the trigger signal is located to the position of the image display trigger point is greater than a radius of a first circular image pre-displayed, displaying the first circular image at the position of the display trigger point of the screen, and recording a center of the first circular image as o(1); and
when measuring that the distance of the position where the trigger signal is located relative to a position of the o(i) is greater than the sum of radiuses of a pre-displayed ith circular image and an (i+1)th circular image, selecting a point, on the continuous moving track of the trigger signal, of which a distance to the position of the o(i) is equal to the sum of the radiuses of the (i)th circular image and the (i+1)th circular image, taking the point as a center o (i+1) of the (i+1)th circular image to be displayed, and displaying the (i+1)th circular image on the position of the o(i+1); wherein *i* ∈ [1, *n*], n is the number of preset displayed images, and n is a natural number.

Alternatively, the image display trigger point setting module is further configured to: after setting the position of the image display trigger point, display an icon representing the image display trigger point on the screen through a visual overlay image mode.

Alternatively, the apparatus is a mobile terminal for displaying an icon of an application program in a lock screen state.

In the method of displaying the image on the screen provided in the above-mentioned technical scheme, the image is displayed on the screen according to the moving track of the trigger signal sent by the user, so that the method for displaying the image on the screen is more novel and diversified.

### Brief Description of Drawings

FIG. 1 is a flow chart of a method for displaying screen images of an embodiment of the present invention;
FIG. 2 is a schematic diagram of displaying an application icon on a dragged track of an unlock icon in an application example of the present invention;
FIG. 3 is a module diagram of an apparatus for displaying screen images of an embodiment of the present invention.

### Preferred Embodiments of the Present Invention

In order to make the objective, technical scheme and advantage of the present invention much more clear and obvious, the embodiment of the present invention is described in detail with reference to the accompanying drawings hereinafter. It should be illustrated that, in the case of not conflicting, the embodiments in the present application and features in these embodiments can be combined with each other.

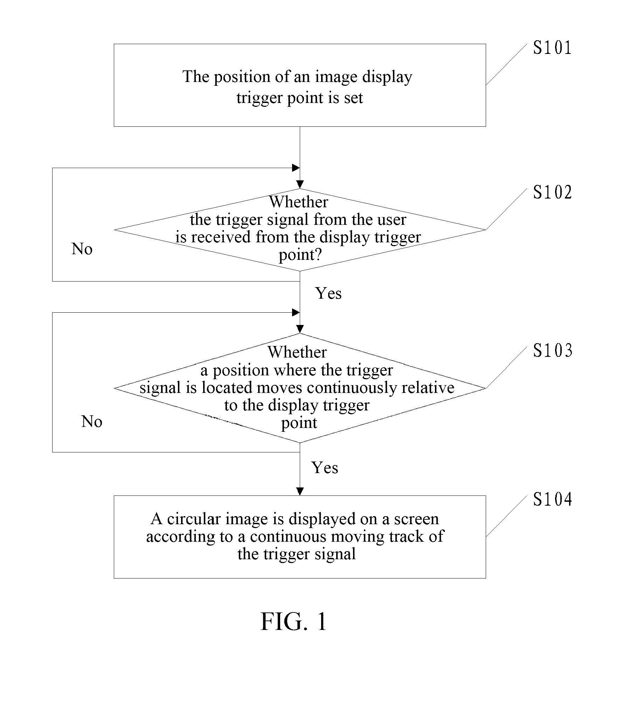

FIG. 1 is a flow chart of a method for displaying screen images of an embodiment of the present invention. As shown in FIG. 1, the method includes the following steps.

In S101, the position of an image display trigger point is set.

In order to promote the user experience, the display trigger point can be prompted to the user on the screen, and the prompting method includes:
indicating the position of the display trigger point on the screen by the characters; and/or, displaying an icon representing the display trigger point on the screen through a visual overlay image mode.
In S102, it is judged whether the trigger signal from the user is received from the display trigger point; if not, then step S102 is continued to be executed; or else, step S103 is executed.
In S103, it is judged whether a position where the trigger signal is located moves continuously relative to the display trigger point; if it moves continuously, then step S104 is executed; or else, step S103 is continued to be executed.
In S104, a circular image is displayed on a screen according to a continuous moving track of the trigger signal.
The step S104 can be realized through the following modes:
   when measuring that the distance of the position where the trigger signal is located relative to the position of the display trigger point is greater than a radius of a first circular image pre-displayed, the first circular image is displayed at the position of the display trigger point of the screen, and a center of the first circular image is recorded as o(1);
   when measuring that the distance of the position where the trigger signal is located relative to a position of the o(i) is greater than the sum of radiuses of a pre-displayed ith circular image and an (i+1)th circular image, a point is selected, on the continuous moving track of the trigger signal, of which a distance to the position of the o(i) is equal to the sum of the radiuses of the (i)th circular image and the (i+1)th circular image, and the point is taken as a center o (i+1) of the (i+1)th circular image to be displayed, and the (i+1)th circular image is displayed on the position of the o(i+1) in the screen; wherein *i ∈* [1, *n*], n is the number of preset displayed images, and n is a natural number.

The above-mentioned embodiment is further explained in detail by taking the mobile phone displaying the application program icon in the lock screen state as an example.

In step one: the position where the unlock icon of the mobile phone is located initially in the lock screen state is set as the position of the display trigger point, and the unlock icon represents the display trigger point; the pre-displayed application program icons are ranked.

When the pre-displayed application program icons are ranked, the application program of which the frequency of utilization is higher is preferably displayed according to the frequency of utilization of the application program.

If the pre-displayed application program icon is not a circular icon, it is also required to turn the pre-displayed application program icon into the circular icon.

In step two, the unlock icon is displayed on the screen through the visual overlay image mode, and it prompts the user "Please drag the unlock icon".

In step three, after the trigger signal from the user is received from the unlock icon, the distance of the position to which the unlock icon is dragged relative to the initial position of the unlock icon is measured every other time T; when the distance of the position to which the unlock icon is dragged relative to the initial position of the unlock icon is greater than the radius r1 of the first application icon pre-displayed, the first application icon is displayed on the initial unlock icon position of the screen, and the center of the first application icon is recorded as o(1).

The distance of the position to which the unlock icon is dragged relative to the o(1) is measured every other time T; when the distance of the position to which the unlock icon is dragged relative to the o(1) is greater than r(1) + r(2), then a point of which a distance to the position of the o(1) is equal to r(1) + r(2) on the dragged track of the unlock icon is selected, and the point is taken as the center o(2) of the second application icon to be displayed, and the second application icon is displayed on the position of the o(2).

The distance of the position to which the unlock icon is dragged relative to the o(2) is measured every other time T; when the distance of the position to which the unlock icon is dragged relative to the o(2) is greater than r(2) + r(3), then a point of which the distance to the position of the o(2) is equal to r(2) + r(3) on the dragged track of the unlock icon is selected, and the point is taken as the center o(3) of the third application icon to be displayed, and the third application icon is displayed on the position of the o(3).

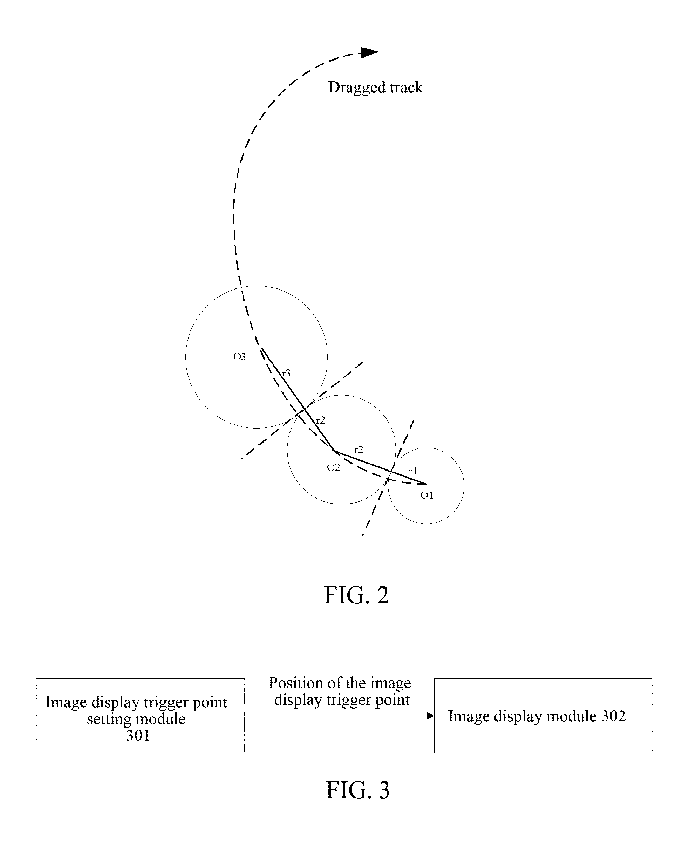

The rest can be done in the same manner; the distance of the position to which the unlock icon is dragged relative to the o(i) is measured every other time T; when the distance of the position to which the unlock icon is dragged relative to the o(i) is greater than r(i) + r(i+1), then a point of which the distance to the position of the o(i) is equal to r(i) + r(i+1) on the dragging track of the unlock icon is selected, and the point is taken as the center o(i+1) of the (i+1)th application icon to be displayed, and the (i)th application icon is displayed on the position of the o(i+1); *i* ∈ [1, *n*], n is the number of preset displayed images and n is a natural number. FIG. 2 provides a schematic diagram of displaying an application icon on a dragged track of an unlock icon in the present application example.

In the present application example, the pre-displayed application icons are displayed sequentially according to the dragged track of the unlock icon; and the longer the dragged track of the unlock icon is, the more the application icons which can be displayed are.

FIG. 3 is a module diagram of an apparatus for displaying screen images of an embodiment of the present invention. As shown in the figure, the apparatus includes an image display trigger point setting module 301 and an image display module 302; wherein
the image display trigger point setting module 301 is configured to set a position of an image display trigger point, and notify the position of the image display trigger point to the image display module 302;
the image display trigger point setting module 301 can further be configured to: after setting the position of the image display trigger point, display an icon representing the display trigger point on the screen through a visual overlay image mode to prompt the position of the display trigger point to a user;
the image display module 302 is configured to: when detecting that a trigger signal from a user is received from the display trigger point and when determining that the trigger signal moves continuously out of the display trigger point, display a circular image on a screen according to a continuous moving track of the trigger signal.

In order to display the circular image on the screen according to the continuous moving track of the trigger signal, the image display module 302 is configured to: when measuring that the distance of the position where the trigger signal is located relative to the position of the display trigger point is greater than a radius of a first circular image pre-displayed, display the first circular image at the position of the display trigger point of the screen, and record a center of the first circular image as o(1); and when measuring that the distance of the position where the trigger signal is located relative to a position of the o(i) is greater than the sum of radiuses of a pre-displayed ith circular image and an (i+1)th circular image, select a point, on the continuous moving track of the trigger signal, of which a distance to the position of the o(i) is equal to the sum of the radiuses of the (i)th circular image and the (i+1)th circular image, take the point as a center o (i+1) of the (i+1)th circular image to be displayed, and display the (i+1)th circular image at the position of the o(i+1) in the screen; wherein *i* ∈ [1, *n*], n is the number of preset displayed images, and n is a natural number.

The above-mentioned apparatus for displaying screen images can be a mobile phone for displaying an application program icon in a lock screen state.

It can be understood by those skilled in the art that all or part of steps in the above-mentioned method can be fulfilled by programs instructing the relevant hardware, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

It should be illustrated that the present invention can have a variety of other embodiments. Those skilled in the art can make the corresponding modifications and variations according to the present invention without departing from the spirit and essence of the present invention. And all of these modifications or the variations should be embodied in the protection scope of the appended claims of the present invention.

### Industrial Applicability

In the method for displaying the image in the screen in the above-mentioned technical scheme, the image is displayed on the screen according to the moving track of the trigger signal sent by the user, so that the method for displaying the image on the screen is more novel and diversified.

## Claims

1. A method for displaying screen images, comprising:
setting a position of an image display trigger point (S101);
when receiving, from the image display trigger point, a trigger signal from a user and when determining that a position where the trigger signal is located moves continuously relative to the image display trigger point, displaying a circular image on a screen according to a continuous moving track of the trigger signal (S102-S104).

2. The method for displaying screen images according to claim 1, wherein the step (S104) of displaying a circular image on a screen according to a continuous moving track of the trigger signal comprises:
when measuring that a distance of the position where the trigger signal is located relative to the position of the image display trigger point is greater than a radius of a first circular image pre-displayed, displaying the first circular image at the position of the image display trigger point of the screen, and recording a center of the first circular image as o(1);
when measuring that a distance of the position where the trigger signal is located relative to a position of o(i) is greater than the sum of radiuses of a pre-displayed ith circular image and an (i+1)th circular image, selecting a point, on the continuous moving track of the trigger signal, of which a distance to the position of the o(i) is equal to the sum of the radiuses of the (i)th circular image and the (i+1)th circular image, taking the point as a center o (i+1) of the (i+1)th circular image to be displayed, and displaying the (i+1)th circular image at a position of the o(i+1) of the screen; wherein *i* ∈ [1, *n*], n is the number of preset displayed images, and n is a natural number.

3. The method for displaying screen images according to claim 1 or 2, further comprising:
after setting the position of the image display trigger point, displaying an icon representing the image display trigger point on the screen through a visual overlay image mode.

4. The method for displaying screen images according to claim 3, used for displaying an application program icon by a mobile terminal in a lock screen state.

5. An apparatus for displaying screen images, comprising: an image display trigger point setting module (301) and an image display module (302); wherein
the image display trigger point setting module (301) is configured to set a position of an image display trigger point, and notify the position of the image display trigger point to the image display module (302);
the image display module (302) is configured to: when detecting that a trigger signal from a user is received from the image display trigger point and when determining that the trigger signal moves continuously out of the image display trigger point, display a circular image on a screen according to a continuous moving track of the trigger signal.

6. The apparatus for displaying screen images according to claim 5, wherein the image display module (302) is configured to display the circular image on the screen according to the continuous moving track of the trigger signal in a following way:
when measuring that a distance of a position where the trigger signal is located relative to the position of the image display trigger point is greater than a radius of a first circular image pre-displayed, displaying the first circular image at the position of the display trigger point of the screen, and recording a center of the first circular image as o(1); and
when measuring that a distance of the position where the trigger signal is located to a position of o(i) is greater than the sum of radiuses of a pre-displayed ith circular image and an (i+1)th circular image, selecting a point, on the continuous moving track of the trigger signal, of which a distance to the position of the o(i) is equal to the sum of the radiuses of the (i)th circular image and the (i+1)th circular image, taking the point as a center o (i+1) of the (i+1)th circular image to be displayed, and displaying the (i+1)th circular image at a position of the o(i+1) of the screen; wherein *i* ∈ [1, *n*], n is the number of preset displayed images, and n is a natural number.

7. The apparatus for displaying screen images according to claim 5 or 6, wherein
the image display trigger point setting module (301) is further configured to: after setting the position of the image display trigger point, display an icon representing the image display trigger point on the screen through a visual overlay image mode.

8. The apparatus for displaying screen images according to claim 7, wherein the apparatus is a mobile terminal for displaying an application program icon in a lock screen state.
